# FASCICULE DE BREVET EUROPEEN

(11) **EP 3 656 607 B1**
(45) Date de publication et mention de la délivrance du brevet: **09.10.2024**
(21) Numéro de dépôt: 19210791.0
(22) Date de dépôt: 21.11.2019
(51) Int. Cl.: B60N 2/24, B61D 33/00, B61D 17/18, B61D 17/08, B60R 13/02

(54) **DISPOSITIF DE SUPPORT D'UN ÉLÉMENT DE CONFORT DANS UN VÉHICULE**
HALTERUNGSVORRICHTUNG FÜR KOMFORTELEMENT IN EINEM FAHRZEUG
DEVICE FOR SUPPORTING A COMFORT ELEMENT IN A VEHICLE

(30) Priorité: 22.11.2018 FR 1871693
(43) Date de publication de la demande: 27.05.2020
(73) Titulaire: SpeedInnov, 75008 Paris (FR)
(72) Inventeur: RODRIGUEZ-GOMEZ, Maria-Isabel, 93400 Saint Ouen (FR); BOULAY, Adrien, 93400 Saint Ouen (FR); HUART, Johan, 59990 Preseau (FR); NOE, Ludovic, 59700 Marcq en Baroeul (FR)
(74) Mandataire: Lavoix

(56) Documents cités:
- EP-A1- 0 754 621
- EP-A1- 2 033 869
- FR-A1- 2 979 316

## Description

La présente invention concerne un support pour un élément de confort destiné à équiper un compartiment pour passagers.

On connait déjà, d'après EP 0 754 621, un support d'élément équipant un compartiment pour passagers.

Un tel compartiment comporte habituellement une pluralité d'éléments de confort, chaque élément de confort étant par exemple un siège, une table ou un support de bagages.

Dans certains cas, il est souhaitable de pouvoir modifier les positions de ces éléments de confort, notamment pour adapter le compartiment à l'affluence et/ou aux besoins de passagers, par exemple en fonction du moment de la semaine ou de la saison. De telles modifications doivent être simples à réaliser, et cela de manière rapide et à bas coût.

On connait déjà, dans l'état de la technique, un dispositif de support d'un élément de confort de voiture de véhicule, comportant :
- un rail de fixation destiné à être fixé à une paroi latérale de la voiture, de manière à s'étendre longitudinalement le long de cette paroi latérale,
- au moins un élément d'interface, destiné à être fixé à l'équipement de confort et à coopérer avec le rail de fixation, pour la solidarisation de cet équipement de confort avec ce rail de fixation.

Le rail n'est généralement pas dissimulé, ou le dispositif comporte des panneaux de masquage du rail qui doivent être remplacés en cas de modification de la position des éléments de confort, ce qui implique des coûts supplémentaires.

L'invention a notamment pour but de remédier à cet inconvénient, en fournissant un dispositif de support dans lequel le rail de support est dissimulé, et cela sans nécessiter de remplacer les panneaux de masquage en cas de modification de la position des éléments de confort.

A cet effet, l'invention a notamment pour objet un dispositif de support selon la revendication 1.

Un dispositif de support selon l'invention peut comporter en outre l'une ou plusieurs des caractéristiques suivantes.
- Le dispositif de support comporte des moyens de fixation de l'élément d'interface sur le rail de fixation, sans lesquels l'élément d'interface est mobile en translation le long du rail de fixation, et avec lesquels l'élément d'interface est verrouillé dans une position choisie sur le rail de fixation.
- Les moyens de fixation comportent au moins un orifice ménagé sur l'élément d'interface, et au moins une vis de serrage complémentaire passant à travers cet orifice pour coopérer avec le rail de fixation.
- Le premier panneau inférieur comporte une première extrémité basse destinée à être fixée à un sol de la caisse, par au moins un organe de fixation, et comprenant une bande de masquage de l'au moins un organe de fixation, rapportée sur le premier panneau inférieur, par exemple par encliquetage.
- L'ensemble comporte, en plus du premier panneau inférieur et du second panneau, un troisième panneau supérieur agencé au-dessus du second panneau.
- Le dispositif de support comporte au moins un élément de fixation fixé au rail de fixation, la première extrémité haute du premier panneau inférieur étant fixée à l'élément de fixation, par exemple par emboîtement de parties complémentaires, et la seconde extrémité basse du second panneau est également fixée à l'élément de fixation, par exemple par emboîtement de parties complémentaires.
- La seconde extrémité basse recouvre la première extrémité haute, avec entre elles un jeu suffisant pour permettre le passage de câbles.

L'invention concerne également une paroi latérale de caisse de véhicule, caractérisée en ce qu'elle comporte un dispositif de support tel que défini précédemment.

L'invention sera mieux comprise à la lecture de la description qui va suivre, donnée uniquement à titre d'exemple et faite en se référant aux figures annexées parmi lesquelles :
- [Fig 1] La figure 1 est une vue en coupe d'une paroi latérale d'une caisse de voiture de véhicule selon un exemple de mode de réalisation de l'invention ;
- [Fig 2] La figure 2 est une vue en perspective de l'arrière d'un ensemble de panneaux de dissimulation équipant la paroi latérale de la figure 1.

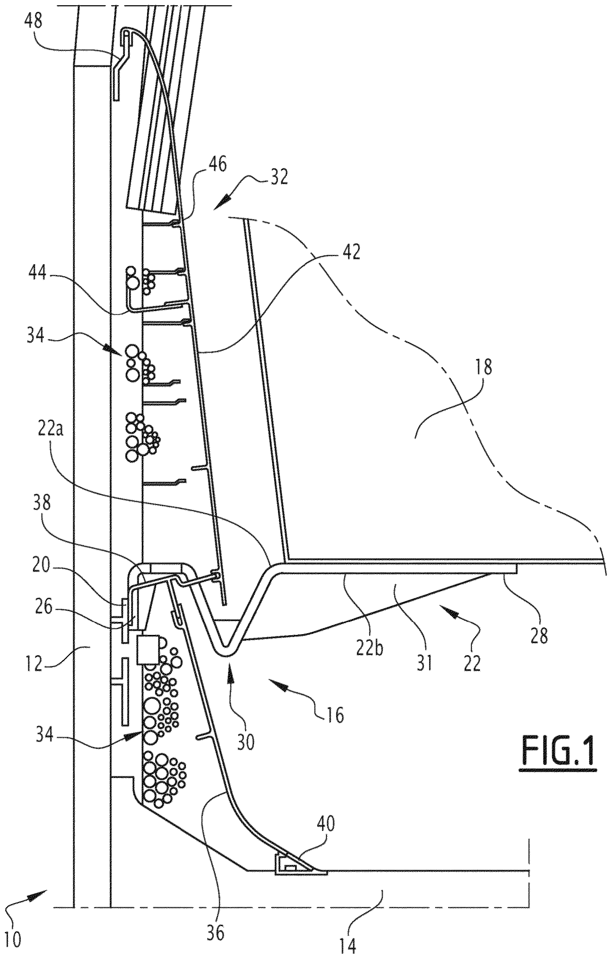

On a représenté partiellement, sur la figure 1, une caisse 10 de véhicule notamment une caisse de voiture de véhicule ferroviaire. Plus particulièrement, on a représenté une paroi latérale 12 de la caisse 10 ainsi qu'une partie d'un plancher 14 de la caisse 10.

La paroi 12 porte un dispositif 16 de support d'un élément de confort 18. Par exemple, l'élément de confort 18 est un siège, mais il pourrait en variante être également choisi parmi une table et un support de bagages.

Le dispositif de support 16 comporte un rail de fixation 20, fixé à la paroi latérale 12 et s'étendant longitudinalement le long de cette paroi latérale 12, c'est-à-dire parallèlement à une direction longitudinale de la voiture.

Le dispositif de support 16 comporte par ailleurs au moins un élément d'interface 22, destiné à être fixé à l'équipement de confort 18 d'une part, et à coopérer avec le rail de fixation 20 d'autre part, pour la fixation de cet équipement de confort 18 sur ce rail de fixation 20.

L'élément d'interface 22 est par exemple réalisé en aluminium ou en acier.

Le dispositif de support 16 comporte des moyens (non représentés) de fixation de l'élément d'interface 22 sur le rail de fixation 20, sans lesquels l'élément d'interface 22 est mobile en translation le long du rail de fixation 20, et avec lesquels l'élément d'interface 22 est verrouillé dans une position choisie sur le rail de fixation 20.

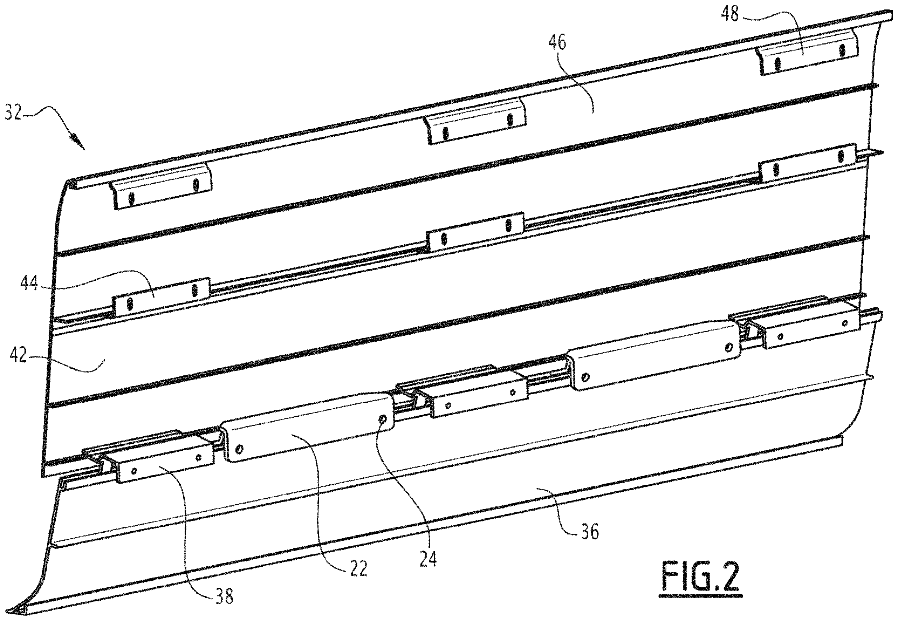

Par exemple les moyens de fixation comportent au moins un orifice 24 (visible sur la figure 2) ménagé sur l'élément d'interface, et au moins une vis de serrage complémentaire passant à travers cet orifice 24.

L'élément d'interface 22 présente une surface supérieure 22a et une surface inférieure 22b, et s'étend transversalement (c'est-à-dire parallèlement à une direction transversale perpendiculaire à la direction longitudinale) entre une première extrémité 26 liée au rail de fixation 20 et une seconde extrémité 28 fixée à l'équipement de confort 18.

L'élément d'interface 22 comprend, entre les première 26 et seconde 28 extrémités, une portion centrale 30 dans laquelle la surface supérieure 22a présente un creux et la surface inférieure 22b présente une bosse. Par exemple, la portion centrale 30 présente une section transversale en forme de V.

Avantageusement, l'élément d'interface 22 comprend, sur sa surface inférieure 22b, des nervures de rigidification 31 s'étendant transversalement entre la portion centrale 30 et la seconde extrémité 28. Il peut également comporter, toujours sur sa surface inférieure 22b, des nervures de rigidification s'étendant transversalement entre la portion centrale 30 et la première extrémité 26.

Avantageusement, l'élément d'interface 22 comprend également des nervures de rigidification s'étendant transversalement dans le creux de la portion centrale 30.

L'élément de confort 18 repose sur la surface supérieure 22b, à laquelle il est fixé par tout moyen approprié envisageable.

Le dispositif de support 16 comporte par ailleurs un ensemble 32 de panneaux, notamment destiné à dissimuler le rail de fixation 20, et à dissimuler des câbles 34 courant le long de la paroi latérale 12, notamment des câbles électriques et des câbles réseau destinés à être connectés à des équipements de l'élément de confort 18. De tels équipements comportent par exemple une prise électrique, une lampe, une prise USB, et/ou tout équipement envisageable.

L'ensemble 32 comporte un premier panneau inférieur 36 comprenant une première extrémité haute logée entre la bosse de la portion centrale 30 et la paroi latérale 12, et une première extrémité basse fixée au sol.

Le dispositif de support 16 comporte au moins un élément de fixation 38 fixé au rail de fixation 20 de la même façon que l'élément d'interface 22. Plus particulièrement, chaque élément d'interface 22 est intercalé, dans la direction longitudinale, entre deux éléments de fixation 38, comme cela est représenté sur la figure 2.

L'élément de fixation 38 est, de la même manière que l'élément d'interface 22, mobile le long du rail de fixation 20 tant qu'il n'est pas verrouillé dans une position choisie sur ce rail 20.

La première extrémité haute du premier panneau inférieur 36 est fixée à l'élément de fixation 38, par exemple par emboîtement de parties complémentaires, et la première extrémité basse de ce premier panneau inférieur 36 est fixée au sol 14 par au moins un organe de fixation, par exemple par vissage. Avantageusement, une bande de masquage 40 est rapportée sur la première extrémité basse, par exemple par encliquetage, pour masquer l'au moins un organe de fixation.

L'ensemble 32 comporte par ailleurs un second panneau intermédiaire 42 comprenant une seconde extrémité haute et une seconde extrémité basse logée dans le creux de la portion centrale 30.

La seconde extrémité basse est également fixée à l'élément de fixation 38, par exemple par emboîtement de parties complémentaires. Cette seconde extrémité basse recouvre la première extrémité haute, avec entre elles un jeu suffisant pour permettre le passage de câbles. Ainsi, les câbles 34 peuvent être reliés à l'équipement de confort en passant à travers ce jeu, et en longeant l'élément d'interface 22, auquel ils peuvent avantageusement être fixés.

Le jeu entre la seconde extrémité basse et la première extrémité haute permet également le passage de l'élément d'interface 22.

La seconde extrémité haute est fixée à un organe de fixation intermédiaire 44, lui-même fixé à la paroi 12.

L'ensemble 32 comporte enfin un troisième panneau supérieur 46, comprenant une troisième extrémité haute et une troisième extrémité basse.

La troisième extrémité basse recouvre la seconde extrémité haute, et elle est également fixée à l'organe de fixation intermédiaire 44.

La troisième extrémité haute est fixée à un organe de fixation supérieure 48, par exemple par emboîtement de parties complémentaires, l'organe de fixation supérieure 48 étant lui-même fixé à la paroi latérale 12.

Les organes de fixation intermédiaire 44 et supérieure 48 sont par exemple fixés sur des rails portés par la paroi latérale 12.

De manière optionnelle, le dispositif de support 16 comporte une pièce d'extrémité à chaque extrémité longitudinale de l'ensemble 32, destinée à recouvrir les bords d'extrémité longitudinale des panneaux. Cette pièce d'extrémité est par exemple réalisée en aluminium.

Les panneaux 36, 42, 46 sont par exemple également réalisés en aluminium, et présentent chacun une épaisseur de préférence inférieure à 5 mm, par exemple de 2,5 mm ou 3 mm.

En variante le véhicule est véhicule routier tel qu'un bus ou un car.

## Revendications

1. Dispositif (16) de support d'un élément de confort (18) destiné à être installé dans une caisse d'un véhicule, le dispositif de support comportant :
- un rail de fixation (20) destiné à être fixé à une paroi latérale (12) de la caisse, de manière à s'étendre longitudinalement le long de cette paroi latérale (12),
- au moins un élément d'interface (22), destiné à être fixé à l'équipement de confort (18) et à coopérer avec le rail de fixation (20), pour la solidarisation de cet équipement de confort (18) avec ce rail de fixation (20),
dans lequel :
- l'élément d'interface (22) présente une surface supérieure (22a) et une surface inférieure (22b), et s'étend latéralement entre une première extrémité (26) liée au rail de fixation (20) et une seconde extrémité (28) fixée à l'équipement de confort (18), l'élément d'interface (22) comprenant, entre les première (26) et seconde (28) extrémités, une portion centrale (30) dans laquelle la surface supérieure (22a) présente un creux et la surface inférieure (22b) présente une bosse,
- le dispositif de support (16) comporte un ensemble (32) de panneaux (36, 42, 46) destiné à dissimuler le rail de fixation (20), l'ensemble comportant un premier panneau inférieur (36) comprenant une première extrémité haute propre à être logée entre la bosse de la portion centrale (30) et la première extrémité (26), et un second panneau (42) comprenant une seconde extrémité basse propre à être logée dans le creux de la portion centrale (30),
**caractérisé en ce que** l'élément d'interface (22) comprend des nervures de rigidification, choisies parmi :
- des nervures de rigidification (31) sur sa surface inférieure (22b), s'étendant transversalement entre la portion centrale (30) et la seconde extrémité (28),
- des nervures de rigidification sur sa surface inférieure (22b), s'étendant transversalement entre la portion centrale (30) et la première extrémité (26), et/ou
- des nervures de rigidification s'étendant transversalement dans le creux de la portion centrale (30).

2. Dispositif de support (16) selon la revendication 1, comportant des moyens de fixation de l'élément d'interface (22) sur le rail de fixation (20), propre à passer d'une première configuration dans laquelle l'élément d'interface (22) est mobile en translation le long du rail de fixation (20), à une deuxième configuration dans laquelle l'élément d'interface (22) est verrouillé dans une position choisie sur le rail de fixation (20).

3. Dispositif de support (16) selon la revendication 2, dans lequel les moyens de fixation comportent au moins un orifice (24) ménagé sur l'élément d'interface (22), et au moins une vis de serrage complémentaire passant à travers cet orifice (24) pour coopérer avec le rail de fixation (20).

4. Dispositif de support (16) selon l'une quelconque des revendications précédentes, dans lequel le premier panneau inférieur (46) comporte une première extrémité basse destinée à être fixée à un sol (14) de la caisse, par au moins un organe de fixation, et comprenant une bande (40) de masquage de l'au moins un organe de fixation, rapportée sur le premier panneau inférieur (36), par exemple par encliquetage.

5. Dispositif de support (16) selon l'une quelconque des revendications précédentes, dans lequel l'ensemble (32) comporte, en plus du premier panneau inférieur (36) et du second panneau (42), un troisième panneau supérieur (46) agencé au-dessus du second panneau (42).

6. Dispositif de support (16) selon l'une quelconque des revendications précédentes, comportant au moins un élément de fixation (38) fixé au rail de fixation (20), la première extrémité haute du premier panneau inférieur (36) étant fixée à l'élément de fixation (38), par exemple par emboîtement de parties complémentaires, et la seconde extrémité basse du second panneau (42) étant également fixée à l'élément de fixation (38), par exemple par emboîtement de parties complémentaires.

7. Dispositif de support (16) selon l'une quelconque des revendications précédentes, dans lequel la seconde extrémité basse recouvre la première extrémité haute, avec entre elles un jeu suffisant pour permettre le passage de câbles (34).

8. Paroi latérale (12) de caisse de véhicule, **caractérisée en ce qu'**elle comporte un dispositif de support (16) selon l'une quelconque des revendications précédentes.

9. Véhicule comprenant au moins une caisse munie de deux parois latérales, **caractérisé en ce que** au moins l'une des parois latérales est selon la revendication 8.

## Patentansprüche

1. Halterungsvorrichtung (16) eines Komfortelements (18), das dazu bestimmt ist, in eine Karosserie eines Fahrzeugs installiert zu werden, die Halterungsvorrichtung umfassend:
- eine Befestigungsschiene (20), die dazu bestimmt ist, an einer Seitenwand (12) der Karosserie befestigt zu werden, um sich in Längsrichtung entlang dieser Seitenwand (12) zu erstrecken,
- mindestens ein Schnittflächenelement (22), das dazu bestimmt ist, an der Komfortausrüstung (18) befestigt zu werden und mit der Befestigungsschiene (20) zusammenzuwirken, für die feste Verbindung dieser Komfortausrüstung (18) mit dieser Befestigungsschiene (20), wobei:
- das Schnittflächenelement (22) eine obere Fläche (22a) und eine untere Fläche (22b) aufweist und sich seitlich zwischen einem ersten Ende (26), das mit der Befestigungsschiene (20) verbunden ist, und einem zweiten Ende (28), das an der Komfortausrüstung (18) befestigt ist, erstreckt, wobei das Schnittflächenelement (22) zwischen dem ersten (26) und dem zweiten (28) Ende einen mittleren Abschnitt (30) umfasst, in dem die obere Fläche (22a) eine Vertiefung und die untere Fläche (22b) eine Erhebung aufweist,
- die Halterungsvorrichtung (16) eine Anordnung (32) von Platten (36, 42, 46) umfasst, die dazu bestimmt sind, die Befestigungsschiene (20) zu verbergen, die Anordnung umfassend eine erste untere Platte (36), umfassend ein erstes oberes Ende, das geeignet ist, um zwischen der Erhebung des mittleren Abschnitts (30) und dem ersten Ende (26) aufgenommen zu sein, und eine zweite Platte (42), umfassend ein zweites unteres Ende, das geeignet ist, um in der Vertiefung des mittleren Abschnitts (30) aufgenommen zu sein,
**dadurch gekennzeichnet, dass** das Schnittflächenelement (22) Versteifungsrippen umfasst, die ausgewählt sind aus:
- Versteifungsrippen (31) auf seiner unteren Oberfläche (22b), die sich quer zwischen dem mittleren Abschnitt (30) und dem zweiten Ende (28) erstrecken,
- Versteifungsrippen auf seiner unteren Oberfläche (22b), die sich quer zwischen dem mittleren Abschnitt (30) und dem ersten Ende (26) erstrecken, und/oder
- Versteifungsrippen, die sich quer in der Vertiefung des mittleren Abschnitts (30) erstrecken.

2. Halterungsvorrichtung (16) nach Anspruch 1, umfassend Befestigungseinrichtungen des Schnittflächenelements (22) an der Befestigungsschiene (20), die geeignet sind, um von einer ersten Konfiguration, in der das Schnittflächenelement (22) translatorisch entlang der Befestigungsschiene (20) beweglich ist, in eine zweiten Konfiguration überzugehen, in der das Schnittflächenelement (22) in einer gewählten Position an der Befestigungsschiene (20) verriegelt ist.

3. Halterungsvorrichtung (16) nach Anspruch 2, wobei die Befestigungseinrichtungen mindestens eine Öffnung (24), die an dem Schnittflächenelement (22) ausgebildet ist, und mindestens eine komplementäre Klemmschraube, die durch diese Öffnung (24) verläuft, um mit der Befestigungsschiene (20) zusammenzuwirken, umfassen.

4. Halterungsvorrichtung (16) nach einem der vorhergehenden Ansprüche, wobei die erste untere Platte (46) ein erstes unteres Ende, das dazu bestimmt ist, durch mindestens ein Befestigungsorgan an einem Boden (14) der Karosserie befestigt zu sein, und ein Maskierungsband (40) des mindestens einen Befestigungsorgans, das an der ersten unteren Platte (36) angebracht ist, beispielsweise durch Einrasten, umfasst.

5. Halterungsvorrichtung (16) nach einem der vorhergehenden Ansprüche, wobei die Anordnung (32) zusätzlich zu der ersten unteren Platte (36) und der zweiten Platte (42) eine dritte obere Platte (46) umfasst, die über der zweiten Platte (42) angeordnet ist.

6. Halterungsvorrichtung (16) nach einem der vorhergehenden Ansprüche, umfassend mindestens ein Befestigungselement (38), das an der Befestigungsschiene (20) befestigt ist, wobei das erste obere Ende der ersten unteren Platte (36) an dem Befestigungselement (38) befestigt ist, beispielsweise durch Ineinanderstecken komplementärer Teile, und das zweite untere Ende der zweiten Platte (42) auch an dem Befestigungselement (38) befestigt ist, beispielsweise durch Ineinanderstecken komplementärer Teile.

7. Halterungsvorrichtung (16) nach einem der vorherigen Ansprüche, wobei das zweite, untere Ende das erste, obere Ende abdeckt, wobei dazwischen ein ausreichender Abstand besteht, um die Durchführung von Kabeln (34) zu ermöglichen.

8. Seitenwand (12) einer Fahrzeugkarosserie, **dadurch gekennzeichnet, dass** sie eine Halterungsvorrichtung (16) nach einem der vorherigen Ansprüche umfasst.

9. Fahrzeug, umfassend mindestens eine Karosserie, die mit zwei Seitenwänden versehen ist, **dadurch gekennzeichnet, dass** mindestens eine der Seitenwände nach Anspruch 8 ist.

## Claims

1. A device (16) for supporting a comfort element (18) intended to be installed in a body of a vehicle, the support device comprising:
- an attachment rail (20) intended to be attached to a side wall (12) of the body, so as to extend longitudinally along this side wall (12),
- at least one interface element (22), intended to be attached to the comfort equipment (18) and to cooperate with the attachment rail (20), for securing this comfort equipment (18) with this attachment rail (20),
wherein:
- the interface element (22) has an upper surface (22a) and a lower surface (22b), and extends laterally between a first end (26) connected to the attachment rail (20) and a second end (28) attached to the comfort equipment (18), the interface element (22) comprising, between the first (26) and second (28) ends, a central portion (30) in which the upper surface (22a) has a hollow and the lower surface (22b) has a bump,
- the support device (16) comprises a set (32) of panels (36, 42, 46) intended to conceal the attachment rail (20), the assembly comprising a first lower panel (36) comprising a first upper end suitable for being housed between the bump of the central portion (30) and the first end (26), and a second panel (42) comprising a second lower end suitable for being housed in the hollow of the central portion (30),
**characterized in that** the interface element (22) comprises stiffening ribs, chosen from:
- stiffening ribs (31) on its lower surface (22b), extending transversely between the central portion (30) and the second end (28),
- stiffening ribs on its lower surface (22b), extending transversely between the central portion (30) and the first end (26), and/or
- stiffening ribs extending transversely in the hollow of the central portion (30).

2. The support device (16) according to claim 1, comprising means for attaching the interface element (22) on the attachment rail (20), adapted to pass from a first configuration in which the interface element (22) is movable in translation along the attachment rail (20), to a second configuration in which the interface element (22) is locked in a selected position on the attachment rail (20).

3. The support device (16) according to claim 2, wherein the attachment means comprise at least one orifice (24) formed on the interface element (22), and at least one complementary clamping screw passing through this orifice (24) to cooperate with the attachment rail (20).

4. The support device (16) according to any one of the preceding claims, wherein the first lower panel (46) comprises a first lower end intended to be attached to a floor (14) of the body, by at least one attachment member, and comprising a strip (40) for masking the at least one attachment member, attached to the first lower panel (36), for example by snap-fastening.

5. The support device (16) according to any one of the preceding claims, wherein the assembly (32) comprises, in addition to the first lower panel (36) and the second panel (42), a third upper panel (46) arranged above the second panel (42).

6. The support device (16) according to any one of the preceding claims, comprising at least one attachment element (38) attached to the attachment rail (20), the first upper end of the first lower panel (36) being attached to the attachment element (38), for example by interlocking of complementary parts, and the second lower end of the second panel (42) also being attached to the attachment element (38), for example by interlocking of complementary parts.

7. The support device (16) according to any one of the preceding claims, wherein the second lower end covers the first upper end, with a clearance between them sufficient to allow the passage of cables (34).

8. A side wall (12) of a vehicle body, **characterized in that** it comprises a support device (16) according to any one of the preceding claims.

9. A vehicle comprising at least one body provided with two side walls, **characterized in that** at least one of the side walls is according to claim 8.
